# EUROPÄISCHE PATENTSCHRIFT

(11) **EP 3 797 658 B1**
(45) Veröffentlichungstag und Bekanntmachung des Hinweises auf die Patenterteilung: **17.04.2024**
(21) Anmeldenummer: 20197799.8
(22) Anmeldetag: 23.09.2020
(51) Int. Cl.: A47J 47/14, B65D 1/36, B65D 43/02, B65D 81/34

(54) **SPEISENBEHÄLTER**
FOOD CONTAINER
RÉCIPIENT ALIMENTAIRE

(30) Priorität: 25.09.2019 DE 102019125770
(43) Veröffentlichungstag der Anmeldung: 31.03.2021
(73) Patentinhaber: Pappler, Sabine, 84539 Ampfing (DE)
(72) Erfinder: Pappler, Sabine, 84539 Ampfing (DE)
(74) Vertreter: Kuhnen & Wacker Patent- und Rechtsanwaltsbüro PartG mbB

(56) Entgegenhaltungen:
- EP-A1- 2 226 260
- WO-A1-95/26302
- DE-A1-102015 011 439

## Beschreibung

Die Erfindung betrifft einen Speisenbehälter zum Aufbewahren, Transportieren, Erwärmen und Servieren von Speisen nach dem Oberbegriff des Patentanspruchs 1.

Derartige Speisenbehälter, die aus Unterschale und Deckel bestehen und zur Aufnahme der Speisen schalenförmige Kammer in der Unterschale haben, werden vorwiegend im Fastfoodbereich verwendet und erlauben es, fertig zubereitete Gerichte in einer Großküche, Kantine oder Verkaufstheke in die Schalen der Unterschale einzufüllen, so dass der Kunde nicht zum sofortigen Verzehr gezwungen ist, sondern das Menü nach Aufsetzen des Deckels nach Hause oder an den Arbeitsplatz mitnehmen kann.

Bisher übliche Speisenbehälter mit eingeformten Schalen oder Kammern bestehen weitgehend aus Leichtmetall wie Aluminiumfolie oder aus EPS-Schaumstoffen, beispielsweise Polystyrol, was gegenüber Behältern aus Leichtmetall den Vorteil einer längeren Warmhaltezeit hat. Nachteilig ist in beiden Fällen jedoch der Materialaufwand für die Herstellung derartiger Einmalbehälter, die nach dem Gebrauch Abfall sind und die Umwelt belasten.

Gegenstand der EP 0 840 697 B1 des Anmelders ist ein Behälter der angegebenen Gattung, bei dem eine Dichtung dauerhaft am Deckel angeformt ist. Zwar ist über den Werkstoff für die Herstellung dieses Speisenbehälters nichts ausgesagt, aber die Tatsache der einstückigen Ausbildung von Deckel und Dichtung lässt vermuten, dass beide aus Hartkunststoff bestehen. Da Deckel und Dichtung einstückig hergestellt sind, ist nach dem Verzehr der Speisen eine Reinigung des Speisenbehälters kaum noch möglich, ohne den Zusammenhalt zwischen Deckel und Dichtung zu zerstören. Der Behälter eignet sich daher ebenfalls nahezu ausschließlich für den Einmalgebrauch.

Ein ähnliches Einweggeschirr ist aus DE 43 25 205 A1 bekannt, bei dem zwischen der Unterschale und den Deckel ein Verbindungskörper eingesetzt ist, der als Dichtungsring ausgebildet ist und ein H-förmiges Querschnittsprofil hat. Die Möglichkeit einer Herstellung als Keramikgefäß ist erwähnt.

DE 10 2015 011439 A1 offenbart einen Dichtungsring zum Abdichten eines Oberteils mit einem Unterteil bestehend aus einem Einfassungsrand, der im Querschnitt einen ersten Hinterschnitt zur Aufnahme des Oberteils und einem zweiten Hinterschnitt zur Aufnahme des Unterteils aufweist, wobei zwischen dem ersten und zweiten Hinterschnitt ein Verbindungsschenkel vorgesehen ist, an dessen Ende ein Stellhebel vorgesehen ist.

Der Erfindung liegt die Aufgabe zugrunde, einen Speisenbehälter nach dem Oberbegriff des Patentanspruchs 1 zur Verfügung zu stellen, der sich für einen Mehrfacheinsatz eignet und eine einfache und sorgfältige Reinigung der drei Bestandteile Unterschale, Deckel und Dichtung erlaubt.

Zur Lösung dieser Aufgabe ist ein Speisenbehälter gemäß Anspruch 1 vorgesehen, wobei die umlaufenden Wände des Deckels eine nicht unterbrochene, im Querschnitt U-förmige Nut für den Eingriff der einstückigen Dichtung aus elastischem Werkstoff aufweisen, die als selbstständiger Verschlusskörper abnehmbar in den Deckel eingesetzt ist, und wobei die Dichtung einen U-förmigen Querschnitt mit zwei parallelen Schenkeln hat, die durch eine einstückig damit ausgebildete Basisleiste miteinander verbunden sind und in die Nut der Wände des Deckels eingreifen.

Mit dieser Lösung besteht die Möglichkeit, Unterschale und Deckel aus einem anderen Werkstoff als die Dichtung herzustellen, beispielsweise aus Porzellan oder Glas, das einfach gereinigt und nahezu unbegrenzt verwendet werden kann. Zudem hat es den Vorteil einer ästhetisch ansprechenden Gestalt, die auch auf einem schön gedeckten Tisch eingesetzt werden kann.

In Weiterbildung der Erfindung sind die umlaufenden Wände der vorzugsweise drei schalenförmigen Kammern sowohl in der Unterschale als auch im Deckel auf wenigstens einem Teil ihrer Kontur durch einen einbeschriebenen Kreis begrenzt. In weiterer Ausgestaltung kann dabei vorgesehen sein, dass die aufeinandertreffenden Wände von zwei oder mehr benachbarten Kammern durch eine sinusartige, nicht lineare Verbindung definiert sind.

Bei dieser Ausgestaltung der schalenförmigen Kammern mit teilweise kreisförmiger Begrenzung werden enge Ecken vermieden, die eine gründliche Reinigung verhindern würden. Da auch die benachbarten Kammern eine nicht lineare Verbindung haben, ist zusätzlich eine bruchsichere Verwendung gewährleistet, beispielsweise im rauen Kantinenbetrieb, weil eine durchgehend geradlinige Verbindung eine Sollbruchstelle darstellen würde.

Durch die Erfindung wird erreicht, dass vor allem während des Transports die schalenförmigen Kammern, die unterschiedliche Speisen enthalten, gegeneinander abgetrennt sind und eine Vermischung verhindern. Die Dichtung kommt beim Transport mit den Speisen in den nebeneinanderliegenden Fächern nicht in Berührung und kann nach Öffnen des Behälters und einem Verzehr der Speisen leicht herausgenommen werden, um eine Reinigung durchzuführen. Nach einem weiteren Merkmal der Erfindung stehen von der Basisleiste der Dichtung elastische Druckvorsprünge ab, die sich bei geschlossenem Behälter mit Vorspannung auf dem ebenen Randflansch der Unterschale abstützen.

Von weiterem Vorteil ist es, wenn an zwei gegenüberliegenden Stellen der Dichtung Verbindungszungen angeformt sind, die über der Unterschale und den darauf aufgesetzten Deckel nach außen vorstehen und elastische, hinterschnittene Rastelemente haben, die den Randflansch von Unterschale und Deckel mit Vorspannung übergreifen. Derartige Rastelemente gestatten einerseits ein rasches und dauerhaftes Verschließen der beiden Behälterteile Unterschale und Deckel und andererseits ein leichtes Öffnen.

Von den Verbindungszungen stehen kegelstumpfförmige Positioniervorsprünge nach oben und unten ab, die in Zentriersitze der Randflansche von Unterschale und Deckel eingreifen. Auf diese Weise ist es möglich, die grundsätzlich als Einzelteile ausgebildeten Elemente Unterschale und Deckel passgenau aufeinanderzusetzen, wobei die kegelstumpfförmigen Positioniervorsprünge einen Puffer bilden, der die Vorspannkraft aufnimmt und verhindert, dass diese auf den Dichtring übertragen wird und diesen dabei verformt.

Wenn nach einem weiteren Merkmal der Erfindung von der Basisleiste der Dichtung Fixiervorsprünge nach oben abstehen, die in Halteschlitze am ebenen Randflasch des Deckels eingreifen, wird auch bei abgenommenem Deckel die Dichtung sicher gehalten und kann nicht herausfallen.

Weitere Merkmale und Vorteile der Erfindung ergeben sich aus den Patentansprüchen und aus der folgenden Beschreibung von Ausführungsbeispielen, die in der Zeichnung dargestellt sind. In dieser zeigen:
Figur 1 die perspektivische Ansicht eines Speisenbehälters nach einer ersten Ausführungsform der Erfindung der Erfindung,
Figur 2 die Draufsicht auf den Deckel der Figur 1,
Figur 3 eine der Figur 1 ähnliche Ansicht des Speisenbehälters,
Figur 4 eine der Figur 2 entsprechende Darstellung des Deckels,
Figur 5 die Unteransicht des Deckels einer ersten Ausführungsform der Erfindung ohne eingehängte Dichtung,
Figur 6 die Unteransicht des Deckels einer ersten Ausführungsform der Erfindung mit eingehängter Dichtung,
Figur 7 die Draufsicht auf die geöffnete Seite der Unterschale,
Figur 8 eine der Figur 7 entsprechende Sicht auf die Unterschale,
Figur 9 die Ansicht der Dichtung einer ersten Ausführungsform der Erfindung von unten,
Figur 10 eine perspektivische Ansicht der Dichtung einer ersten Ausführungsform der Erfindung von unten,
Figur 11 in vergrößerter Schnittdarstellung einen Ausschnitt aus der zwischen Deckel und Unterschale eingesetzten Dichtung einer ersten Ausführungsform der Erfindung,
Figur 12 eine Schnittdarstellung der Dichtung einer ersten Ausführungsform der Erfindung im Mittelabschnitt zwischen Deckel und Unterschale,
Figur 13 eine Schnittdarstellung der Dichtung einer ersten Ausführungsform der Erfindung im äußeren Teil von Deckel und Unterschale und
Figur 14 die im Mittelbereich des Deckels eingehängte Dichtung einer ersten Ausführungsform der Erfindung im Querschnitt und
Figur 15 eine Schnittdarstellung der Dichtung einer zweiten Ausführungsform der Erfindung im äußeren Teil von Deckel und Unterschale und
Figur 16 eine Draufsicht auf den Deckel mit eingelegter Dichtung einer zweiten Ausführungsform der Erfindung von unten und
Figur 17 eine perspektivische Ansicht der Dichtung einer zweiten Ausführungsform der Erfindung von unten und
Figur 18 eine Schnittdarstellung der Dichtung einer zweiten Ausführungsform der Erfindung im äußeren Teil von Deckel und Unterschale an der Position eines Fixiervorsprungs.

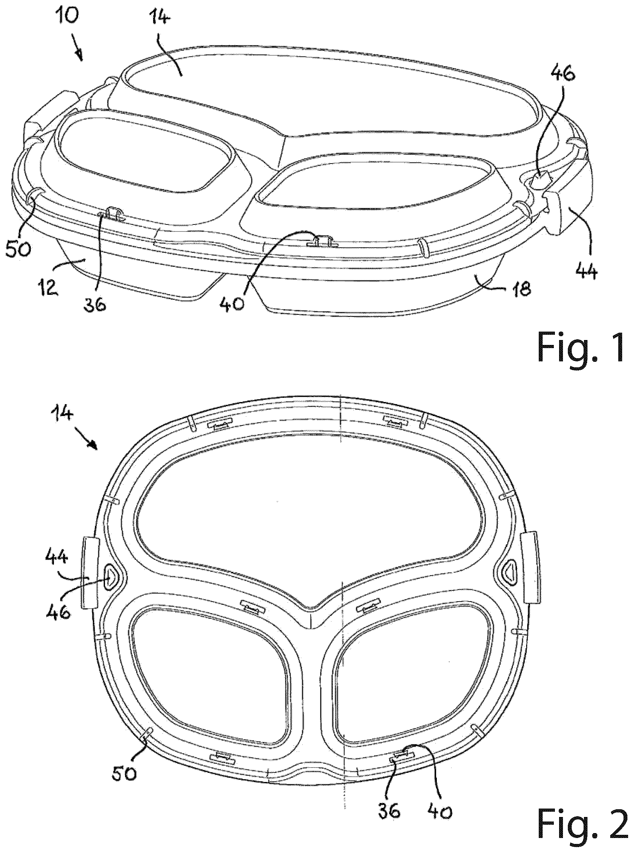

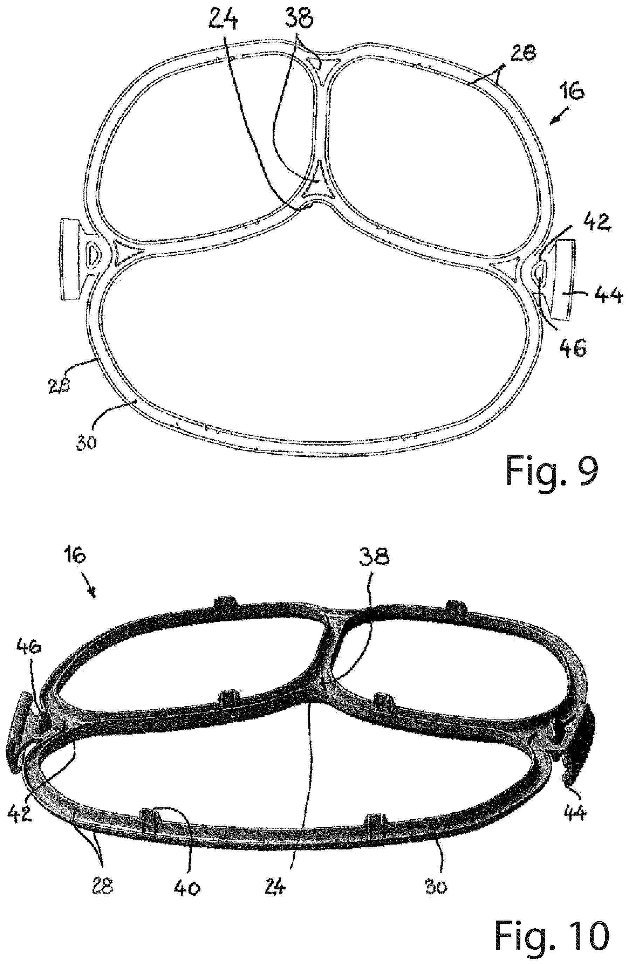

Die Figuren 1 bis 4 zeigen in seiner Gesamtheit einen Speisenbehälter 10 gemäß der Erfindung mit Unterschale 12 und Deckel 14. Zwischen beide ist eine Dichtung 16 aus elastischem Werkstoff eingelegt, z. B. Silikon, die gemäß den Figuren 9 und 10 einen selbstständigen Verschlusskörper bildet, der herausgenommen werden kann.

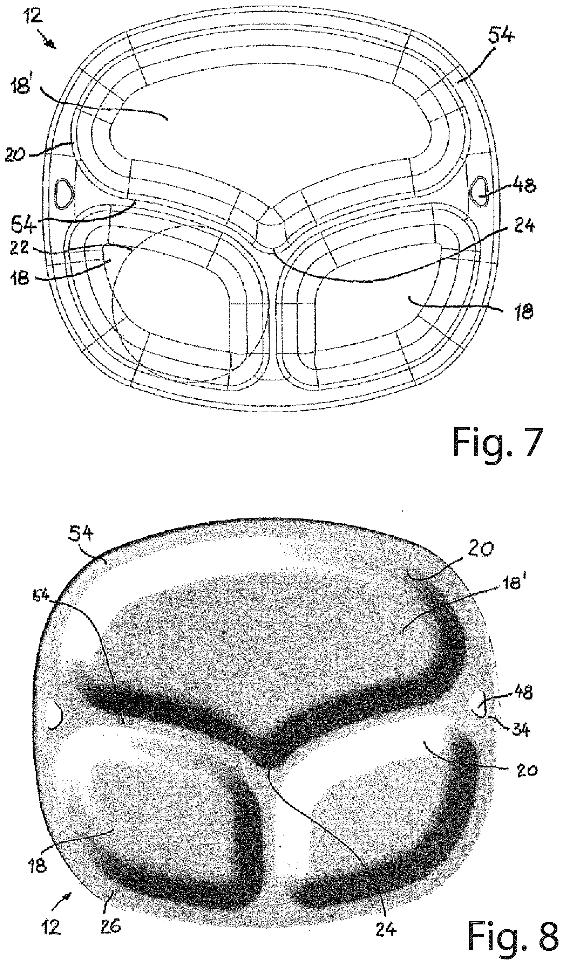

Aus den Figuren 7 und 8 ergibt sich, dass in die Unterschale 12 aus Porzellan drei aus Vertiefungen bestehende, schalenförmige Kammern 18 eingearbeitet sind, die zur Aufnahme von Speisen dienen. Im bevorzugten Ausführungsbeispiel handelt es sich hierbei um zwei kleinere Kammern 18, die nebeneinanderliegen und in der Draufsicht von einer größeren Kammer 18' übergriffen werden. Die Kammern 18, 18' in der Unterschale 12 sind durch umlaufende, schräge Wände 20 voneinander abgeteilt, die einen bogenförmigen Verlauf haben. In Figur 7 ist hierzu beispielsweise eingezeichnet, dass die umlaufenden Wände 20 der beiden kleineren Kammern 18 auf wenigstens einem Teil ihrer Kontur durch einen einbeschriebenen Kreis 22 begrenzt sind. Von wesentlicher Bedeutung ist in diesem Zusammenhang, dass die aufeinandertreffenden Wände 20 zwischen den kleineren Kammern 18 und der größeren Kammer 18' in der Draufsicht nicht durch eine Gerade gebildet werden, sondern zur Vermeidung einer Sollbruchlinie durch eine sinusartige, nicht lineare Verbindung, die im mittleren Bereich eine Nase 24 bildet.

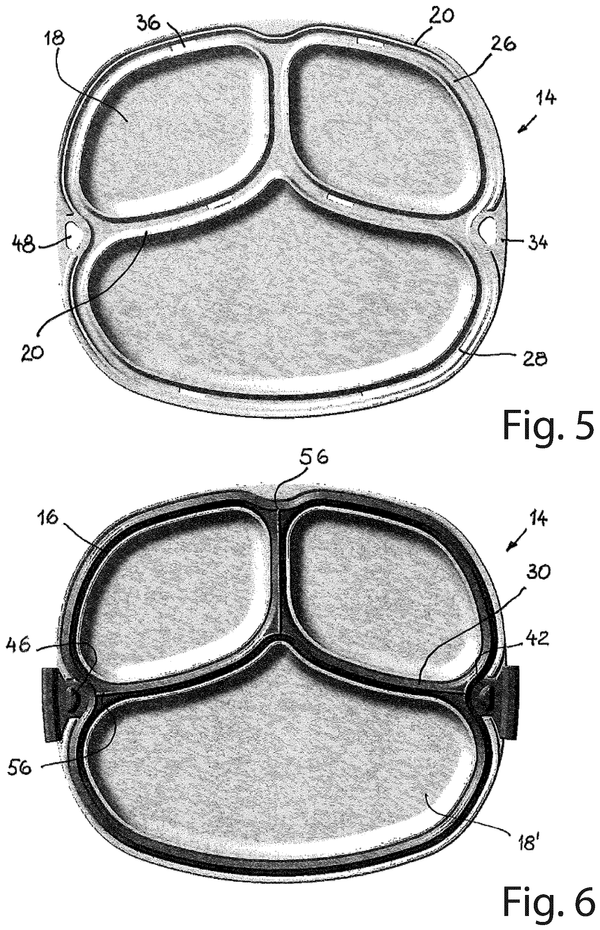

Wie die Figuren 7 und 8 weiter erkennen lassen, haben die Wände 20 im Bereich der Unterschale 12 umlaufende, obere Scheitelflächen 54, die der Form der Wände 20 folgen und die für die Anlage der Dichtung 16 dienen, die in den Figuren 6, 9 und 10 zu erkennen ist. Die Scheitelflächen 54 aller Wände 20 liegen in einer gemeinsamen, horizontalen Ebene.

Aus den Figuren 5 und 6 geht hervor, dass auch in den Deckel 14 schalenförmige Kammern eingearbeitet sind, die den gegenüberliegenden Kammern 18, 18' in der Unterschale 12 deckungsgleich entsprechen. Auch im Deckel 14 werden die Kammern 18, 18' durch umlaufende Wände 20 begrenzt, die hier jedoch im Querschnitt Nuten 26 bilden, in die die umlaufende Dichtung 16 von oben eingreift.

Wie die Figuren 9, 10 und 12 zeigen, hat die Dichtung 16 auf allen Teilen ihrer Länge einen U-förmigen Querschnitt mit zwei parallelen Schenkeln 28, die durch eine einstückig damit ausgebildete Basisleiste 30 miteinander verbunden sind. Die Basisleiste 30 hat, wie aus den Figuren 9 und 10 hervorgeht, in die Nut 26 vorstehende, im Zwickelbereich aufeinandertreffender Basisleisten 30 dreieckige Materialverdickungen 38, die dem Druckausgleich dienen.

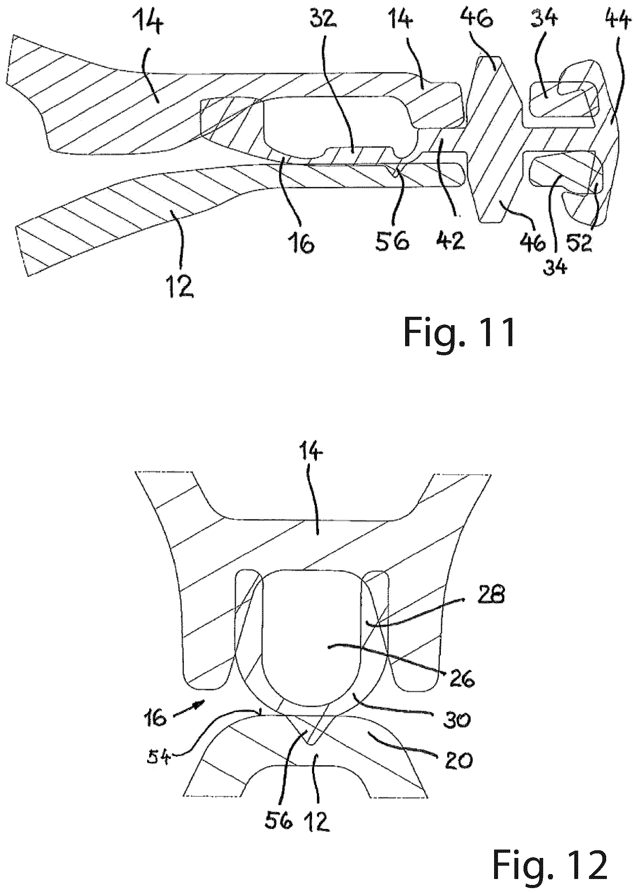

Bei aufgesetztem Deckel 14 stützt sich die Basisleiste 30 über Druckvorsprünge 56 (vgl. Figuren 6 und 12) auf der gegenüberliegenden Scheitelfläche 54 der mittleren und äußeren Wand 20 der Unterschale 12 ab. Figur 12 zeigt weiter, dass die eine U-Form bildenden, parallelen Schenkel 28 der Dichtung 16 über einen Klemmsitz mit Vorspannung in die Nut 26 eingedrückt sind, in der sie durch Fixiervorsprünge 40 sicher gehalten werden.

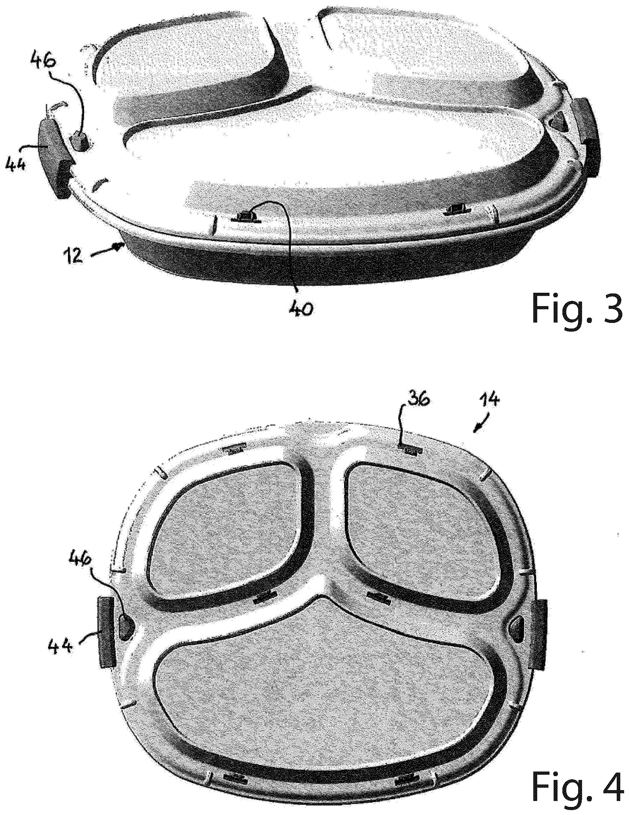

Hierzu ist in den Figuren 1 bis 5 zu erkennen, dass zur Halterung der Dichtung 16 in die Nuten 26 des Deckels 14 einer ersten Ausführungsform der Erfindung Halteschlitze 36 eingearbeitet sind, in welche die an der Dichtung 16 einer ersten Ausführungsform der Erfindung angeformten Fixiervorsprünge 40 eingreifen, die als Widerhaken ausgebildet sein können. Figur 4 zeigt einen Schnitt durch die Dichtung 16, deren langer Schenkel 28` mit seinem Fixiervorsprung 40 in einen Halteschlitz 36 eingehängt ist.

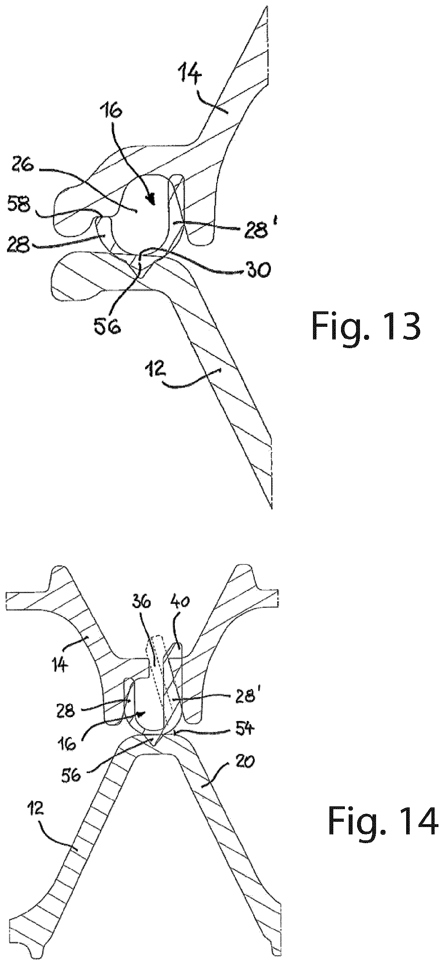

Aus Figur 12 geht hervor, dass die im Querschnitt U-förmige Dichtung 16 im Innenbereich des Deckels 14 zwei gleichlange Schenkel 28 hat, die durch eine dünnere Basisleiste 30 miteinander verbunden sind. Gemäß Figur 13 hat jedoch die Dichtung 16, wie erwähnt, im Außenbereich einen kurzen Schenkel 28 und einen längeren Schenkel 28'. Der kürzere Schenkel 28 zeigt umlaufend nach außen und stützt sich bei einer ersten Ausführungsform der Erfindung mit seinem oberen Ende an einer Stufe 58 der Nut 26 ab.

An zwei gegenüberliegenden Stellen der Dichtung 16 sind gemäß den Figuren 9 und 10 an dieser Verbindungszungen 42 angeformt, die über den in Figur 11 ersichtlichen Randflansch 34 sowohl der Unterschale 12 als auch des darauf aufgesetzten Deckels 14 nach außen vorstehen. Wie Figur 11 zeigt, ist der Randflansch 34 des Deckels 14 im äußeren Bereich zwischen Stapelnocken 50 (Figur 1) nach oben versetzt, um den nach außen ansteigenden Randflansch 34 zu kompensieren. An den Enden der Verbindungszungen 42 sind elastische, nach oben und unten vorstehende Rastelemente 44 ausgebildet, die auf einer Seite den Randflansch 34 der Unterschale 12 und auf der anderen Seite des Deckels 14 mittels eines Hinterschnitts 52 elastisch übergreifen (vgl. Figur 11). Beim Aufdrücken des Deckels 14 werden die Rastelemente 44 elastisch aufgespreizt, um anschließend mit Vorspannung in ihre Raststellung zurückzukehren. Gleichzeitig übergreifen die unteren Rastelemente 44 auf der gegenüberliegenden Seite elastisch auch den Randflansch 34 der Unterschale 12.

Wie die Figuren 9 bis 11 weiter zeigen, stehen von den Verbindungszungen 42 einer ersten Ausführungsform der Erfindung sowohl nach oben als auch nach unten kegelstumpfförmige Positioniervorsprünge 46 ab, die in entsprechende Zentriersitze 48 (vgl. Figur 5) der Randflansche 34 der Unterschale 12 und des Deckels 14 eingreifen und aufgrund ihrer Keilform einen passgenauen Eingriff in den jeweiligen Zentriersitz 48 begünstigen.

Der Dicht- und Verschlusskörper 16 wird in drei Schritten an der Innenseite des Deckels 14 angebracht:
Zunächst wird der Deckel 14 mit seiner Rückseite auf einen Tisch gelegt. Dann nimmt man den Dichtring 16 und drückt ihn beidseitig in die Nut 26 des Deckels 14. Dabei stoßen die kegelstumpfförmigen Positioniervorsprünge 46 durch die beiden Zentriersitze 48 des Deckels 14, wobei außen das Rastelement 44 eingreift. Durch diese Maßnahme liegt der Dichtkörper 16 punktgenau richtig.

Danach drückt man in einem zweiten Schritt die Fixiervorsprünge 40 durch die Halteschlitze 36 im Deckel 14. Da die Fixiervorsprünge 40 Widerhaken aufweisen, sind diese ein wichtiger Bestandteil für eine schnelle Montage, da sie sicherstellen, dass der Dichtring 16 beim Aufsetzen des Deckels 14 auf die Unterschale 12 nicht ungewollt vorn und hinten abkippen kann.

Dabei ist darauf zu achten, dass der Dichtring 16 insgesamt mit dem langen, nach innen zeigenden Schenkel 28' seines U-Profils in der dafür vorgesehenen Nut 26 liegt. Nachdem nun der Dicht- und Verschlussring 16 mit dem Deckel 14 fest verbunden ist und somit eine Einheit bildet, ist der komplette Deckel 14 mit dem Verschlussring 16 zur weiteren Verwendung vorbereitet.

Der dritte Schritt erfolgt erst, wenn der Deckel 14 zum Verschließen auf die Unterschale 12 aufgesetzt wird. Bei diesem Schritt laufen automatisch folgende Dicht- und Verschlusstechniken ab:
Zunächst lenkt man mit den Fingern beidseitig das nach unten zeigende, gekröpfte Rastelement 44 des Dichtringes 16 nach außen und steckt die Positioniervorsprünge 46 beidseitig in die Zentriersitze 48 der Unterschale 12. Dadurch wird der Deckel 14 fluchtgenau mit der Unterschale 12 verbunden.

Sobald die Dichtung 16 mit ihrem Druckvorsprung 56 zur Anlage an der Scheitelfläche 54 der Wand 20 der Unterschale 12 kommt, wird durch den weiteren Druck der Bereich der Dichtung 16 nach oben in die Nut 26 gedrückt. Gleichzeitig werden die langen Schenkel 28` der Dichtung 16 an der Nut 26 zugewandten Seiten der äußeren Wand 20 der dahinterliegenden Kammer 18 umlaufend bis ans Ende der Nut 26 geschoben. Da die langen Schenkel 28` um jede Kammer 18 einen Ring bilden, wird jede von diesen nach außen luftdicht verschlossen. Da die Wände 20 in Richtung Nut 26 außen schräg verlaufen, wird der umlaufende Dichtring 16 durch die Schräge die gedehnt und somit noch stärker an die Wände 20 gepresst. Der beim Verschließen entstehende Überdruck in jeder Kammer 18 kann durch kurzzeitige weitere Dehnung in Richtung Nut 26 entweichen. Dabei ist festzustellen, dass bei der ersten Ausführungsform der Erfindung der Bereich der Nut 26 durch die Halteschlitze 36, die zugleich den Fixiervorsprüngen 40 als Halt dienen, lufttechnisch zum Außenbereich zählen. Der jeweils umlaufend nach außen zeigende und verkürzte Schenkel 28 stützt sich bei der ersten Ausführungsform der Erfindung an der umlaufenden Stufe 58 innerhalb der Nut 26 ab und dient somit als Gegenlager zur Funktion der Dichtung 16. Der ganz außen am Deckel 14 umlaufende Rand dient dabei der seitlichen Abstützung. Im Bereich der Zunge 42 wird dieser Rand durch die Positioniervorsprünge 46 ersetzt.

Der erfindungsgemäße Verschluss- und Dichtring 16 kann immer eingesetzt werden, ganz gleich, ob der Speisenbehälter 10 eine, zwei oder mehr Kammern 18 hat. Bei einer Unterschale 12 mit nur einer Kammer 18 gibt hat auch der Deckel 14 nur eine Kammer 18, bei der der nach innen zeigende, lange Schenkel 28' nur einen Ring bildet. Der äußere, kürzere Schenkel 28 dient immer nur zur Abstützung der Dichtung 16. Die Dichtung 16 wird zum Essen nicht herausgenommen, sondern nur zum Zweck der Reinigung.

Die Vorspannung zwischen Positioniervorsprung 46 und dem gekröpften Rastelement 44 mit den Hinterschnitten 52 muss immer oben und unten vorhanden sein. Bei der Ausführungsform der Figur 11 wird die Vorspannung durch die gekröpften, mit Hinterschnitten 52 versehenen Rastelemente 44 erzeugt.

Das Öffnen des Menübehälters 10 erfolgt durch Auslenkung der Hinterschnitte 52 unter Mithilfe des anstehenden Druckes der Dichtung.

Da die Basisleiste 30 eine geringere Dicke als die Schenkel 28, 28 "hat (vgl. Figur 12), wird eine wellenartige Verformung ermöglicht. Dadurch wird beim Schließen und der damit einhergehenden Biegeverformung der Druck durch den Druckvorsprung 56 weit nach außen in Richtung Schenkel 28 gelenkt. Durch diese Minderung der Materialstärke wird weitestgehend vermieden, dass ungewollte Stauch- und Klemmkräfte zur Seite entstehen, sondern Zugkräfte in Richtung Nut 26. Durch diese Umwandlung der Kräfte in Zugkräfte in Richtung Nut 26 wird verhindert, dass auf mehreren Ebenen Druck auf die Scheitelfläche 54 des Unterteils 12 entsteht. Bei diesem Vorgang wird zeitgleich der nach innen zeigende lange Schenkel 28' (vgl. Figur 13) zur Abdichtung an der Außenwand der dahinter liegenden Kammer 18 des Deckels 14 umlaufend bis ans Ende der Nut 26, d.h. bis in den Nutgrund gezogen.

Der Dicht- und Verschlussring 16 hat auf Grund seiner breit angelegten Wirkungsweisen den Vorteil, herstellungsbedingte Toleranzen und Deformierungen bestmöglich abzudecken. Dieser Druck landet letztlich in den Hinterschnitten 52 am Rastelement 44. Dabei wird mit den Fingern beidseitig der nach unten zeigende Hinterschnitt 52 nach außen bewegt und anschließend eingerastet. Damit alle diese vorstehend beschriebenen Vorgänge funktionieren, ist der Hohlraum, den die Nut 26 bildet, eine wesentliche Bedingung. Dass diese Nut 26 lufttechnisch zum Au-ßenbereich zählt, spielt dabei eine erhebliche Rolle. Dies ist umso wichtiger, wenn man die eingefüllten Speisen unter Schutzatmosphäre verpacken oder vakuumieren will. Der anstehende Außendruck im Bereich der Nut 26 unterstützt dabei wesentlich die gesamte Abdichtung.

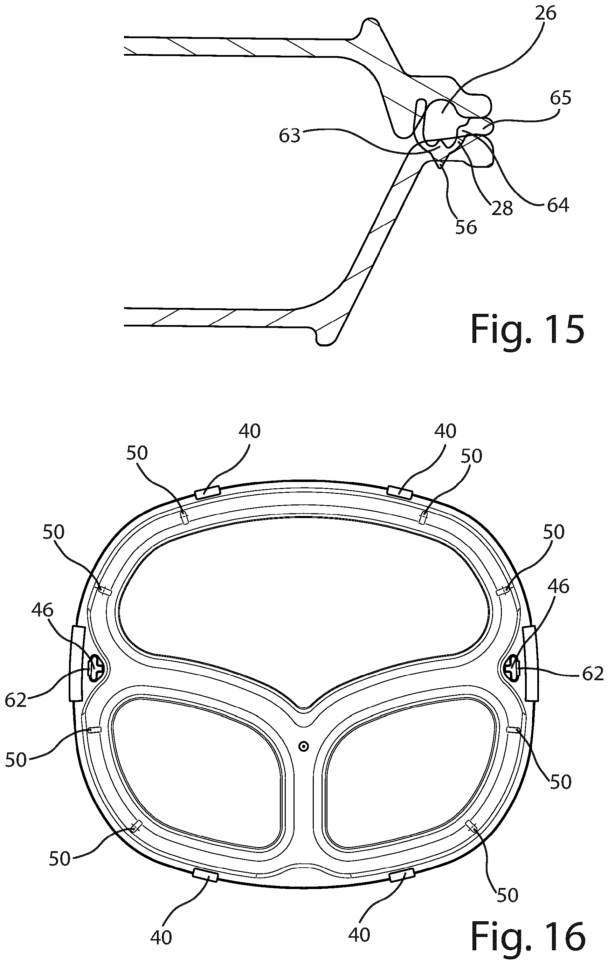

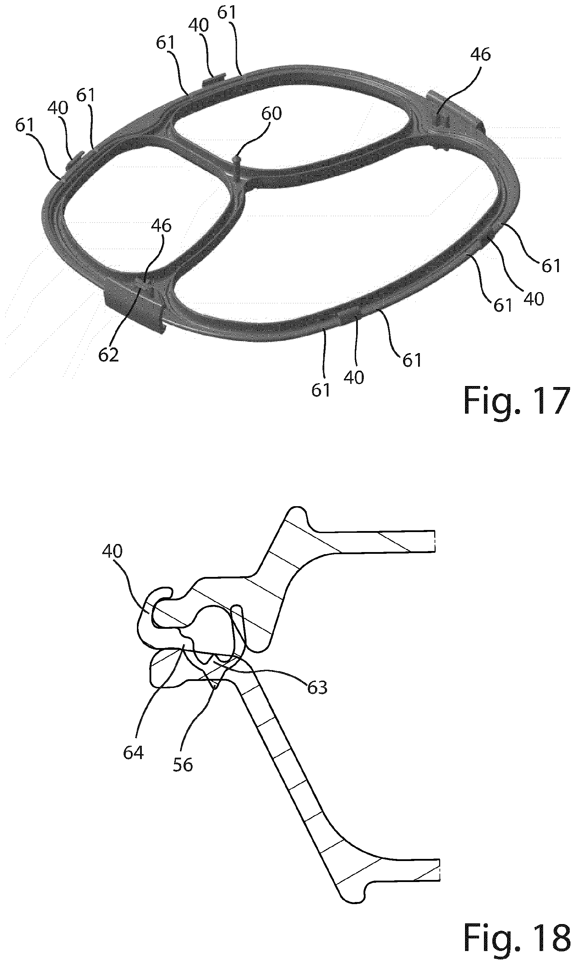

Figuren 15 bis 18 zeigen eine Weiterbildung der oben beschriebenen Ausführungsformen als zweite Ausführungsform.

Wie aus Fig. 15 zu ersehen ist, weist die Nut 26 im Deckel der Weiterbildung der oben beschriebenen Ausführungsformen keine Stufe 58 auf, an der sich der kurze Schenkel 28 der Dichtung 16 seitlich abstützt. Durch den Wegfall dieser Stufe 58, der der Abstützung des kurzen Schenkels 28 der Dichtung 16 seitlich nach außen diente, kann der Bereich der Verbindungszunge 42 erweitert werden und einen umlaufenden Verschlussring 16 bilden. Durch den Wegfall der Stufe 58 bildet der äußere Rand des Deckels eine eben Fläche.

Dadurch wird die U-förmige Dichtung 16 von innen umlaufend zu gleichen Bedingungen mit dem kurzen Schenkel 28, an der Innenseite mit dem außen umlaufenden Verschlussring 65 verbunden wodurch sich in der Dichtung 16 eine Biegestufe 64 ergibt die dem kurzen Schenkel 28 in Richtung des Deckels Freiraum zur Ausdehnung gibt. "Umlaufend zu gleichen Bedingungen" bedeutet in diesem Zusammenhang, dass sich insbesondere im Bereich der Biegestufe 64 eine hohe Flexibilität entlang des gesamten Umfangs der Dichtung 16 ergibt. Diese hohe Flexibilität wirkt sich vorteilhaft auf die gesamte Biegeverformung der Dichtung 16 aus. Durch die Anbindung des kurzen Schenkels 28 am Verschlussring 65 konnte die Stufe 58 des Deckels, die der seitlichen Abstützung des kurzen Schenkels 28 diente, entfallen. Durch die Biegestufe 64 der Dichtung 16 wird der Hohlraum der Nut 26 vergrößert. Hierdurch können die Materialverdickungen durch den Druckvorsprung 56 beim Schließen des Speisebehälters in diesem Bereich leicht nach außen bis zum Grund der Nut 26 gedrückt werden.

Wie in den Figuren 16, 17 und 18 dargestellt, weist die Dichtung 16 der zweiten Ausführungsform außen an dem Verschlussring mindestens zwei, bevorzugt vier, Fixiervorsprünge 40 auf die den äußeren Rand des Deckels umgreifen. Die beiden in der Mitte befindlichen Fixiervorsprünge 40 der beschriebenen ersten Ausführungsform können durch einen pilzförmigen Fixiervorsprung 60 an der dreieckigen Materialverstärkung im Zentrum ersetzt werden, der sich in einem darüber befindlichen Loch im Deckel verankert.

Da durch die Verlegung der Fixiervorsprünge 40 nach aussen die Halteschlitze 36 im Porzellan, die zugleich auch der Entlüftung der Nut dienten, entfallen, können in einer bevorzugten Ausführung der zweiten Ausführungsform am Verschlussring 65 der dem Deckel zugewandten Seite, Luftauslässe 61 angebracht werden.

Bei der horizontalen Abdichtung, die durch den Druckvorsprung 56 erzeugt wird, kann man zwei Stufen unterscheiden. Der außen am Gefäß umlaufende Druckvorsprung der Dichtung 16 hat bei der Abdichtung oberste Priorität. Der im Innenbereich des Speisebehälters befindliche Druckvorsprung 56, spielt bei der Abdichtung zwischen den Kammern eine untergeordnete Rolle. Beim Bestehen eines Unterdruckes im Innenbereich des Speisebehälters, wie er beispielsweise durch das Abkühlen der heiß eingefüllten Speise entsteht, kann durch Ziehen am pilzförmigen Fixiervorsprung 60 geprüft werden, ob in allen Kammern ein Vakuum besteht. Sollte eine Kammer undicht sein, löst sich dadurch das Vakuum im gesamten Speisebehälter. Die von den Verbindungszungen 42 der Dichtung 16 nach oben und nach unten abstehenden T-förmigen Positioniervorsprünge 46 der in Fig. 16 dargestellten Weiterbildung der oben beschriebenen Ausführungsformen, weisen jeweils eine nach außen zeigende Verriegelung 62 zur Verstärkung der Zuhaltung auf. Beim Öffnen des Behälters kann durch eine starke Auslenkung des Verschlussringes nach außen und oben die Verriegelung gelöst werden und dann durch den anstehenden Druck der Deckel einfach abgenommen werden. In einer bevorzugten Ausführung der zweiten Ausführungsform der Erfindung sind die nach unten abstehenden (im aufgesetzten Zustand zur Unterschale hinweisenden) T-förmigen Positioniervorsprünge 46 länger als die nach oben abstehenden, zum Deckel hingerichteten, T-förmigen Positioniervorsprünge 46. Besonders bevorzugt liegt die Länge der nach oben abstehenden T-förmigen Positioniervorsprünge 46 in einem Bereich von 6 mm bis 8 mm und die Länge der nach unten abstehenden T-förmigen Positioniervorsprünge 46 in einem Bereich von 14 mm bis 16 mm. Dadurch dass die unteren T-förmigen Positioniervorsprünge 46 länger sind als die oberen T-förmigen Positioniervorsprünge 46 kann der Deckel schon korrekt positioniert werden bevor er auf der Unterschale aufliegt.

Durch Anbringung eines dreieckförmigen inneren Vorsprunges 63 an der Innenseite gegenüber des Druckvorsprunges 56 wird der Teil des Kreisbogens in diesem Bereich, weitestgehend an der Verformung gehindert und dadurch der Druck zur Seite gemindert.

Zusätzlich wird erreicht, dass der Druck am Druckvorsprung 56 direkt bis zur Spitze des dreieckförmigen inneren Vorsprunges 63 übertragen wird. Somit wird der Druck größtenteils in einen Zug in Richtung der Nut 26 umgewandelt. Im weiteren Verlauf, im Zwickelbereich aufeinander treffender Basisleisten, teilt sich dieser dreieckförmige innere Vorsprung 63 und umschließt jeweils zur Hälfte die dreieckigen Materialverdickungen in diesem Bereich.

Durch die langen Schenkel 28` am U-förmigen Dichtring 16, die jeweils die dahinter liegende Kammer vertikal umlaufend umschließen, kann durch die Stellung gerade oder nach innen oder außen zeigend, der Dichtdruck gemindert oder verstärkt werden.

## Patentansprüche

1. Speisenbehälter zum Aufbewahren, Transportieren, Erwärmen und Servieren von Speisen, umfassend eine Unterschale (12), einen Deckel (14) und eine beide miteinander verbindende Dichtung (16), wobei in der Unterschale (12) zur Aufnahme der Speisen wenigstens eine schalenförmige Kammer (18, 18') eingearbeitet ist, der eine deckungsgleiche Kammer im Deckel (14) gegenüberliegt und die Kammern in der Unterschale (12) und im Deckel (14) von umlaufenden Wänden (20) umgeben sind, wobei die Wände (20) des Deckels (14) Nuten (26) für den Eingriff der Dichtung (16) aufweisen, wobei die umlaufenden Wände (20) der Unterschale (12) und/oder des Deckels (14) eine ununterbrochene, im Querschnitt U-förmige Nut (26) für den Eingriff der einstückigen Dichtung (16) aus elastischem Werkstoff aufweisen, die als selbstständiger Verschlusskörper abnehmbar in den Deckel (14) eingesetzt ist,
**dadurch gekennzeichnet, dass** die Dichtung (16) einen U-förmigen Querschnitt mit zwei parallelen Schenkeln (28) hat, die durch eine einstückig damit ausgebildete Basisleiste (30) miteinander verbunden sind und in die Nut (26) der Wände (20) des Deckels (14) eingreifen.

2. Speisenbehälter nach Anspruch 1, **dadurch gekennzeichnet, dass** die gegenüberliegenden Schenkel (28, 28') unterschiedlich lang sind.

3. Speisenbehälter nach Anspruch 2, **dadurch gekennzeichnet, dass** sich der kürzere Schenkel (28) an einer Stufe (54) der Nut (26) abstützt.

4. Speisenbehälter nach einem der Ansprüche 1 bis 3, **dadurch gekennzeichnet, dass** die Basisleiste (30) eine geringere Dicke als die Schenkel (28, 28') hat.

5. Speisenbehälter nach einem der Ansprüche 1 bis 4, **dadurch gekennzeichnet, dass** von der Basisleiste (30) der Dichtung (16) elastischen Druckvorsprünge (56) abstehen, die sich bei geschlossenem Behälter mit Vorspannung auf der ebenen Scheitelflächen (54) Wand (20) der Unterschale (12) abstützen.

6. Speisenbehälter nach einem der Ansprüche 1 bis 5, **dadurch gekennzeichnet, dass** an zwei gegenüberliegenden Stellen der Dichtung (16) Verbindungszungen (42) angeformt sind, die über die Unterschale (12) und den darauf aufgesetzten Deckel (14) nach außen vorstehen und elastische, hinterschnittene Rastelemente (44) haben, die den Randflansch (34) der Unterschale (12) und des Deckels (14) mit Vorspannung übergreifen.

7. Speisenbehälter nach Anspruch 6, **dadurch gekennzeichnet, dass** von den Verbindungszungen (42) nach oben und unten kegelstumpfförmige Positioniervorsprünge (46) abstehen, die unter Vorspannung in gegenüberliegende Zentriersitze (48) im Randflansch (34) sowohl der Unterschale (12) als auch des Deckels (14) eingreifen.

8. Speisenbehälter nach einem der Ansprüche 1 bis 2, **dadurch gekennzeichnet, dass** die Dichtung (16) mindestens zwei Fixiervorsprünge (40) aufweist, die einen äußeren Rand des Deckels (14) umgreifen.

9. Speisenbehälter nach Anspruch 8, **dadurch gekennzeichnet, dass** die Dichtung (16), in Draufsicht betrachtet, im Zentrum der Dichtung (16) einen pilzförmigen Fixiervorsprung (60) aufweist.

10. Speisenbehälter nach einem der Ansprüche 8 bis 9, **dadurch gekennzeichnet, dass** die Dichtung (16) in Draufsicht nach oben und nach unten abstehende T-förmige Positioniervorsprünge (46) mit jeweils einer nach außen zeigenden Verriegelung (62) zur Verstärkung der Zuhaltung aufweist.

11. Speisenbehälter nach Anspruch 5, **dadurch gekennzeichnet, dass** die Dichtung (16) gegenüber der elastischen Druckvorsprünge (56) dreieckförmige Vorsprünge (63) aufweist.

12. Speisenbehälter nach Anspruch 1, **dadurch gekennzeichnet, dass** die umlaufenden Wände (20) der Unterschale (12) einen Querschnitt die Form eines kopfstehenden U haben, deren obere Scheitelflächen (54) in einer gemeinsamen, horizontalen Ebene liegen und zur Anlage der Dichtung (16) dienen.

13. Speisenbehälter nach Anspruch 1 oder 12, **dadurch gekennzeichnet, dass** sowohl die Unterschale (12) als auch der Deckel (14) aus Porzellan hergestellt sind.

14. Speisenbehälter nach einem der Ansprüche 12 oder 13, **dadurch gekennzeichnet, dass** die umlaufenden Wände (20) von mehr als einer schalenförmigen Kammer (18) sowohl in der Unterschale (12) als auch im Deckel (14) auf wenigstens einem Teil ihrer Kontur durch einen einbeschriebenen Kreis (22) begrenzt sind.

15. Speisenbehälter nach einem der Ansprüche 12 bis 14, **dadurch gekennzeichnet, dass** die aufeinandertreffenden Wände (20) von zwei oder mehr benachbarten, schalenförmigen Kammern (18, 18') durch eine sinusartige, nichtlineare Verbindung definiert sind, die in ihrem mittleren Bereich eine Nase (24) bildet.

## Claims

1. Food container for storing, transporting, heating and serving food, including a lower dish (12), a cover (14) and a sealing (16) interconnecting both, with the lower dish (12) having worked thereinto at least one dish-shaped chamber (18, 18') for receiving food, which is opposed by one congruent chamber in the cover (14), and the chambers in the lower dish (12) and in the cover (14) being surrounded by circumferential walls (20), with said walls (20) of the cover (14) comprising grooves (26) for being engaged by the sealing (16), with said circumferential walls (20) of the lower dish (12) and/or the cover (14) comprising a continuously formed groove (26) of a U-shaped cross-section, which groove is for the engagement by the integrally formed sealing (16) made of elastic material, which, as an independent locking body, is removably inserted into the cover (14),
**characterized in that** the sealing (16) has a U-shaped cross-section having two parallel struts (28) connected to each other by a base rail (30) integrally formed therewith and engaging with the groove (26) of the walls (20) of the cover (14).

2. Food container according to claim 1, **characterized in that** said opposing struts (28, 28') are of different lengths.

3. Food container according to claim 2, **characterized in that** the shorter one of the struts (28) is supported against a step (54) of the groove (26).

4. Food container according to one of claims 1 to 3, **characterized in that** the thickness of the base rail (30) is less than that of the struts (28, 28').

5. Food container according to one of claims 1 to 4, **characterized in that** elastic pressure projections (56) protrude from the base rail (30) of the sealing (16) which, when preloaded, support against the wall (20) of the planar apices (54) of the lower dish (12) when the container is closed.

6. Food container according to one of claims 1 to 5, **characterized in that** connecting tongues (42) are integrally formed at two opposing regions of the sealing (16), with said connecting tongues (42) outwardly protruding beyond the lower dish (12) and the cover (14) placed thereon and having undercut, elastic locking members (44) gripping beyond the marginal flange (34) of the lower dish (12) and the cover (14) when preloaded.

7. Food container according to claim 6, **characterized in that** the connecting tongues (42) have upper and lower frustoconical positioning projections (46) protruding therefrom, which, when preloaded, engage with opposing centering seats (48) in the marginal flange (34) of both the lower dish (12) and the cover (14).

8. Food container according to one of claims 1 and 2, **characterized in that** the sealing (16) comprises at least two fastening tabs (40) embracing an outer edge of the cover (14).

9. Food container according to claim 8, **characterized in that** the sealing (16), in a plan view, comprises a mushroom-shaped fastening tab (60) at the center of the sealing (16).

10. Food container according to one of claims 8 to 9, **characterized in that** the sealing (16), in a plan view, has T-shaped positioning projections (46) protruding in upward and downward directions and each having an outward-pointing lockage (62) for enhancement of closure.

11. Food container according to claim 5, **characterized in that** the sealing (16) has triangular projections (63) opposite the elastic pressure projections (56).

12. Food container according to claim 1, **characterized in that** the circumferential walls (20) of the lower dish (12) have a cross-section in the shape of an upside-down U, and the upper apices (54) of which are in a common horizontal plane, thus serving for engagement of the sealing (16).

13. Food container according to one of claim 1 or claim 12, **characterized in that** both the lower dish (12) and the cover (14) are made of porcelain.

14. Food container according to one of claims 12 or 13, **characterized in that** that the circumferential walls (20) of more than one dish-shaped chamber (18) are limited by an inscribed circle (2) both in the lower dish (12) and in the cover (14) on at least one part of their contour.

15. Food container according to one of claims 12 to 14, **characterized in that** the converging meeting walls (20) of two or more adjacent dish-shaped chambers (18, 18') are defined by a sinusoidal non-linear connection forming a nose (24) at the center region thereof.

## Revendications

1. Récipient pour aliments destiné à conserver, transporter, réchauffer et servir des aliments, comprenant une cuvette inférieure (12), un couvercle (14) et un joint d'étanchéité (16) reliant les deux l'un à l'autre, au moins une chambre en forme de cuvette (18, 18') étant ménagée dans la cuvette inférieure (12) pour recevoir les aliments, chambre en face de laquelle se trouve une chambre coïncidente dans le couvercle (14), et les chambres dans la cuvette inférieure (12) et dans le couvercle (14) étant entourées par des parois périphériques (20), les parois (20) du couvercle (14) présentant des rainures (26) pour l'engagement du joint d'étanchéité (16),
dans lequel
les parois périphériques (20) de la cuvette inférieure (12) et/ou du couvercle (14) présentent une rainure (26) ininterrompue, de section transversale en forme de U, pour l'engagement du joint d'étanchéité (16) réalisé d'un seul tenant en matériau élastique, qui est inséré de manière amovible dans le couvercle (14) en tant que corps de fermeture autonome,
**caractérisé en ce que** le joint d'étanchéité (16) présente une section transversale en forme de U avec deux branches parallèles (28) qui sont reliées l'une à l'autre par une baguette de base (30) formée d'un seul tenant avec celles-ci et qui s'engagent dans la rainure (26) des parois (20) du couvercle (14).

2. Récipient pour aliments selon la revendication 1,
**caractérisé en ce que** les branches opposées (28, 28') sont de longueurs différentes.

3. Récipient pour aliments selon la revendication 2,
**caractérisé en ce que** la branche plus courte (28) s'appuie sur un gradin (54) de la rainure (26).

4. Récipient pour aliments selon l'une des revendications 1 à 3,
**caractérisé en ce que** la baguette de base (30) présente une épaisseur inférieure à celle des branches (28, 28').

5. Récipient pour aliments selon l'une des revendications 1 à 4,
**caractérisé en ce que** des saillies de pression élastiques (56) dépassent de la baguette de base (30) du joint d'étanchéité (16) et s'appuient avec précontrainte sur des surfaces de sommet (54) planes de la paroi (20) de la cuvette inférieure (12), lorsque le récipient est fermé.

6. Récipient pour aliments selon l'une des revendications 1 à 5,
**caractérisé en ce que** des languettes de liaison (42) sont conformées à deux emplacements opposés du joint d'étanchéité (16), qui font saillie vers l'extérieur au-delà de la cuvette inférieure (12) et du couvercle (14) posé sur celle-ci, et qui ont des éléments d'encliquetage (44) élastiques en contre-dépouille qui coiffent avec précontrainte la bride de bord (34) de la cuvette inférieure (12) et du couvercle (14).

7. Récipient pour aliments selon la revendication 6,
**caractérisé en ce que** des saillies de positionnement (46) tronconiques vers le haut et vers le bas dépassent des languettes de liaison (42) et s'engagent sous précontrainte dans des sièges de centrage opposés (48) dans la bride de bord (34) aussi bien de la cuvette inférieure (12) que du couvercle (14).

8. Récipient pour aliments selon l'une des revendications 1 à 2, **caractérisé en ce que** le joint d'étanchéité (16) présente au moins deux saillies de fixation (40) qui entourent un bord extérieur du couvercle (14).

9. Récipient pour aliments selon la revendication 8,
**caractérisé en ce que** le joint d'étanchéité (16), vu de dessus, présente au centre du joint d'étanchéité (16) une saillie de fixation (60) en forme de champignon.

10. Récipient pour aliments selon l'une des revendications 8 à 9,
**caractérisé en ce que** le joint d'étanchéité (16) présente des saillies de positionnement (46) en forme de T qui, en vue de dessus, dépassent vers le haut et vers le bas et qui présentent chacune un verrouillage (62) dirigé vers l'extérieur pour renforcer l'interverrouillage.

11. Récipient pour aliments selon la revendication 5,
**caractérisé en ce que** le joint d'étanchéité (16) présente des saillies triangulaires (63) en face des saillies de pression élastiques (56).

12. Récipient pour aliments selon la revendication 1,
**caractérisé en ce que** les parois périphériques (20) de la cuvette inférieure (12) ont une section transversale en forme de U renversé, dont les surfaces de sommet supérieures (54) sont situées dans un plan horizontal commun et servent à l'appui du joint d'étanchéité (16).

13. Récipient pour aliments selon la revendication 1 ou 12,
**caractérisé en ce que** la cuvette inférieure (12) et le couvercle (14) sont tous deux fabriqués en porcelaine.

14. Récipient pour aliments selon l'une des revendications 12 ou 13,
**caractérisé en ce que** les parois périphériques (20) de plus d'une chambre en forme de cuvette (18), tant dans la cuvette inférieure (12) que dans le couvercle (14), sont délimitées sur au moins une partie de leur contour par un cercle inscrit (22).

15. Récipient pour aliments selon l'une des revendications 12 à 14,
**caractérisé en ce que** les parois (20), qui se rejoignent, de deux ou plusieurs chambres (18, 18') en forme de cuvette adjacentes sont définies par une liaison sinusoïdale non linéaire qui forme un nez (24) dans sa partie centrale.
